# EUROPEAN PATENT SPECIFICATION

(11) **EP 4 112 270 B1**
(45) Date of publication and mention of the grant of the patent: **02.08.2023**
(21) Application number: 21191277.9
(22) Date of filing: 13.08.2021
(51) Int. Cl.: B29C 51/08, B29C 51/16, B29C 51/34, B29C 51/44, B65D 1/16, B65D 1/30, B65D 21/02, B29C 33/00, B29C 51/26, B29L 31/00

(54) **THERMOFORMING MACHINE FOR CONTAINERS**
THERMOFORMMASCHINE FÜR BEHÄLTER
MACHINE DE THERMOFORMAGE POUR RÉCIPIENTS

(30) Priority: 02.07.2021 ES 202131380 U
(43) Date of publication of application: 04.01.2023
(73) Proprietor: Decam Technology Solutions 2000, S.L., 26370 Navarrete, La Rioja (ES)
(72) Inventor: GONZÁLEZ SAN PEDRO, Alfredo, 26370 Navarrete (La Rioja) (ES)
(74) Representative: Ungria López, Javier

(56) References cited:
- EP-B1- 3 326 782
- EP-B1- 3 434 615

## Description

### Object of the invention

The invention consists of a thermoforming machine, the object of which is to obtain packs of inverted conical containers with more than one row and more than one column from a thermoforming sheet, and all this without increasing material waste due to the shape of the container. More specifically, the object is to obtain containers of this type in packs with a 2x2, 3x2 and 4x2 format, apart from also allowing a 1x2 container format to be obtained.

### Background of the invention

The use of thermoforming machines for containers is known, which comprise a sheet of film that is unwound by a drive in order to be introduced into the machine and transported along it by pulling with chains. The first process is a process of heating the sheet to be able to thermoform the containers immediately afterwards. The containers are filled and then sealed by another lid reel, the cut is performed according to an arrangement of packs of 1x2, 2x2, 3x2 or 2x4 containers selected by the operator, and they are removed from the machine by a conveyor.

Each of these processes is carried out in different stations, such that the thermoforming station consists of a press, responsible for carrying out a lifting movement, and tooling, which must be changed to obtain the different container shapes provided in the state of the art. The press is made up of a fixed portion (1a) anchored to a frame, a movable table (1b) and a head (1c). The thermoform tooling, which consists of a mould (4a, 4b) tied to the movable table and a piston cap (5a, 5b) tied to the head of the press, is tied to the press.

The chains that make the sheet of material move forward along the machine are assembled on plastic guides that facilitate the forward movement thereof.

These machines are used to manufacture cylindrical or non-inverted conical containers; however, in the case of inverted conical containers, only packs of containers with a 1x2 format are manufactured, since the manufacture of the other pack formats would produce a large amount of material waste that must then be treated. This is due to the fact that in order to demould the containers, the thermoforming mould must be made of two parts that can be separated and opened when the movable table is lowered, so that the inverted conical containers can be extracted after thermoforming, unlike the cylindrical and non-inverted conical containers that can be extracted directly without opening the mould. This situation would require that for packs of inverted conical containers to be manufactured in a 2x2, 3x2 or 2x4 format, the containers previously formed in the preceding cycle should be separated from the mould by a sufficient distance so that they can be opened without coming into contact with each other; therefore, the distance between rows of containers must be increased to allow the mould to open, in other words, to establish a larger feed step, which would generate a large amount of waste material of the thermoforming sheet. For this reason, inverted conical containers are not manufactured in these pack formats.

Current machines which manufacture this type of container have a sheet cutting station and a different pull system, and instead of moving a continuous sheet forward, it moves forward with pieces of material separated from each other, preventing waste generation but making it impossible to produce packs with more than one row.

Therefore, the machines of the state of the art developed to obtain inverted conical containers are only used to make packs of containers with a 1x2 format.

Document EP 3326782 B1 refers to undercut pots, moulds, moulding apparatuses and production lines for making undercut pots, particularly to an undercut pot comprising a bottom wall, a side wall closed on itself and connected to the bottom wall and an opening providing access to the inside of the pot.

The invention allows the previous pack formats to be manufactured, wherein the only waste that is generated, as is the case with the cylindrical and non-inverted conical containers of the state of the art, are the side strips where the pull chain of the sheet is taken up and some parts that are cut with star-shaped punches to form radii of the flap of the containers.

A thermoforming machine according to the preamble of claim 1 is also internally known.

### Description of the invention

To achieve the objectives and solve the aforementioned problems, the invention, like conventional machines, comprises a thermoforming station that is equipped with a thermoforming press that is fed with a sheet of material, previously heated. The press is equipped with a head, on which a piston cap is arranged, and a movable table, on which a thermoforming mould for inverted conical containers is arranged. The mould comprises two parts that can be separated when demoulding is carried out by lowering the movable table. The sheet is pulled by a guided chain.

The main novelty of the invention resides in the ability to manufacture inverted conical containers in 2x2, 3x2 or 2x4 pack formats, formats which already exist for groups of cylindrical and non-inverted conical containers, wherein the containers are arranged very close to each other, generating the least amount of waste possible.

For this, in the outlet section of the thermoforming mould, the chain guides have a machining tilted in an upward direction, which creates a break in the sheet so that the previously formed inverted conical containers tilt, moving them away from the mould and preventing the mould from contacting said previously formed containers when it is opened so that they cannot be damaged.

The described configuration allows inverted conical containers to be obtained in 1x2, 2x2, 3x2 or 2x4 pack formats, so that, just as cylindrical and non-inverted conical containers are obtained, the minimum distance between containers is maintained, ensuring that no additional waste of the thermoforming material is generated. The only waste that is generated are the side strips where the pull chain is taken up and the stars punches that form the radii of the flap of the vessels.

The pack format to be obtained is formed by a cutting station that conventionally incorporates machines of this type, in which a pack format of 1x2, 2x2, 3x2 or 4x2 containers is selected.

To facilitate the tilting of the previously formed containers, it has been envisaged that the machine of the invention can further comprise a hold-down arm for the sheet in the area where the tilted guides begin.

The separable two-piece mould comprises a single moulding row, arranged transversely on the sheet, which has 6x1 cavities in the preferred embodiment, such that six inverted conical containers are obtained in each machine step.

The separable parts of the mould are actuated by a pneumatic actuator and comprise roller followers that rest on cams provided on the head to separate both parts as the movable table lowers.

The two-piece mould is assembled off-centre in such a way that a free machine step is left to allow it to open without also contacting the adjacent heating plate.

It has been envisaged that the machine can further comprise, like the machines in the state of the art, a labeller equipped with pairs of moulds that can rotate 180°, wherein one has the labels arranged in the mould before thermoforming, while thermoforming is carried out on the other.

### Description of the figures

To complete the description, and for the purpose of helping to make the features of the invention more readily understandable, this description is accompanied by a set of figures constituting an integral part of the same, which by way of illustration and not limitation represents the following:

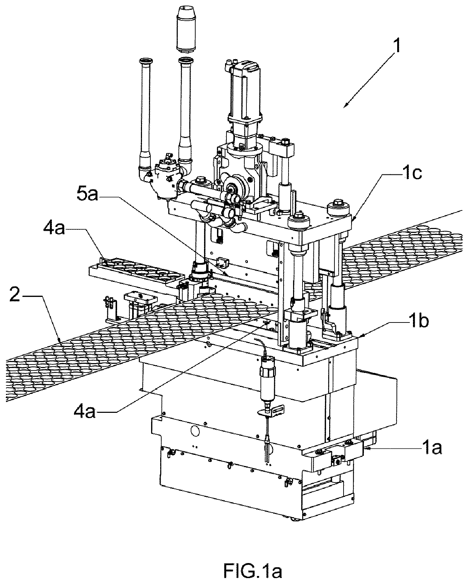

Figure 1a shows a perspective view of the thermoforming press of the machine which is not part of the invention in which a one-piece mould with 6x2 cavities has been assembled to obtain cylindrical or non-inverted conical containers.

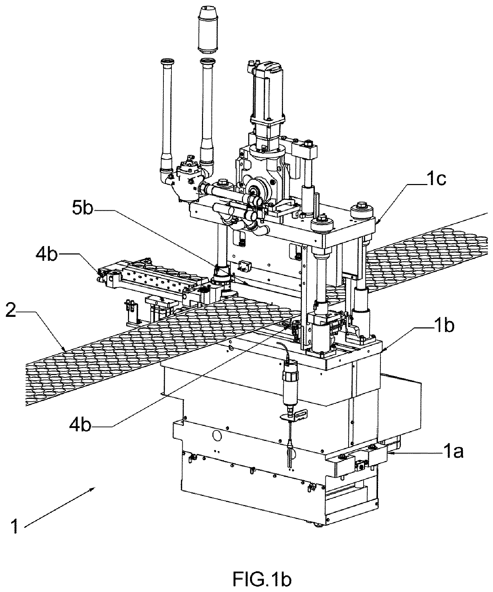

Figure 1b shows a perspective view of the press of the machine of the invention in which a two-piece mould with 6x1 cavities has been assembled to obtain inverted conical containers.
Figure 2a shows a schematic representation of the arrangement of the heating stations and the mould of Figure 1a.
Figure 2b shows a schematic representation of the arrangement of the heating stations and the mould of Figure 1b.

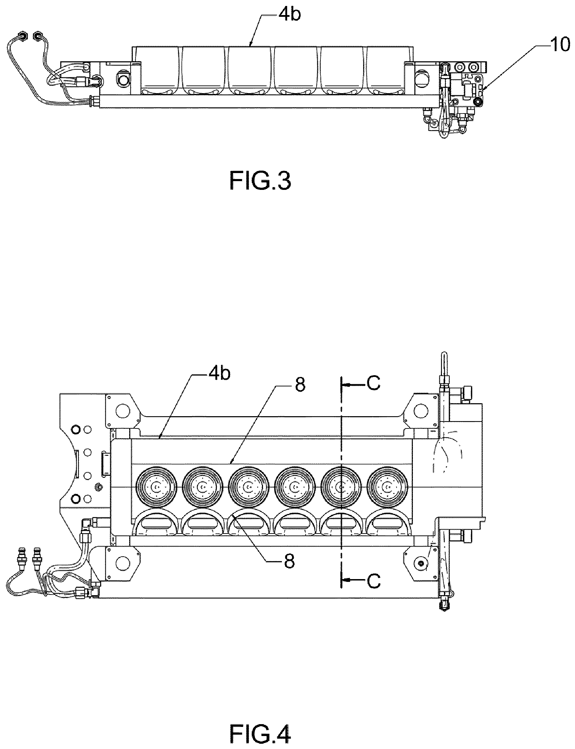

Figure 3 shows the elevation view of the mould of Figure 1b.
Figure 4 shows the top view of the mould of Figures 1b and 2.

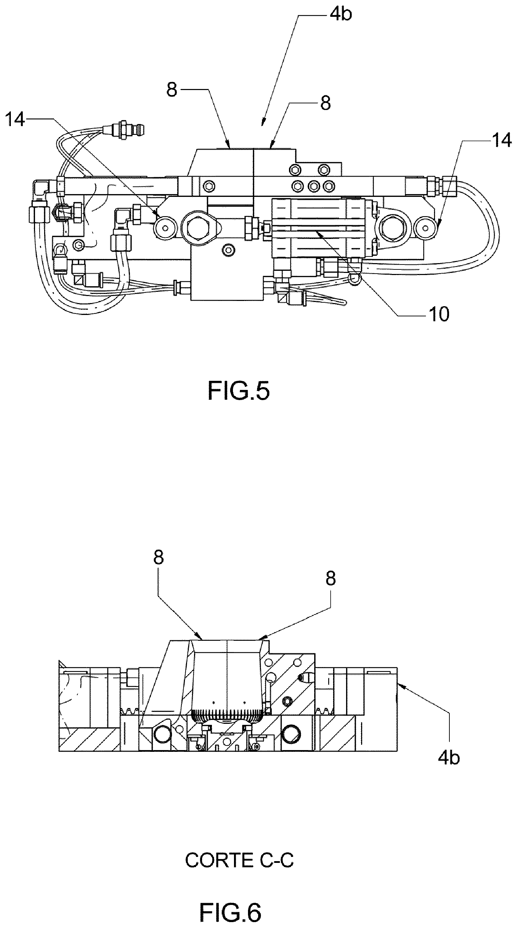

Figure 5 shows a side view of the mould of Figures 1b, 2 and 3.
Figure 6 shows a view according to the cross section C-C of Figure 4.
Figure 7 shows the position of the press in the thermoforming position.
Figure 8 shows the position of the press in the position just after thermoforming.
Figures 9 to 13 show a schematic representation of the opening of the mould in the process of obtaining inverted conical containers, wherein the guides that create the break in the sheet of thermoforming material can be seen.
Figure 14 shows the arrangement of the hold-down element that together with the guides facilitates the breaking of the thermoforming sheet and tilting of the previously formed inverted conical containers, as represented in Figures 9 to 13.

### Preferred embodiment of the invention

The invention is described below based on the aforementioned figures, the first objective of which, as already stated, is to make packs of inverted conical containers with a 2x2, 3x2 and 2x4 format in a thermoforming machine, generating minimal material waste, so that said product is presented in a way that is different from usual, since on the market these containers are only manufactured in packs of two 1x2 units, and never in packs of 2x2, 3x2 or 2x4 units, due to the additional waste that the manufacture thereof would generate, as previously mentioned.

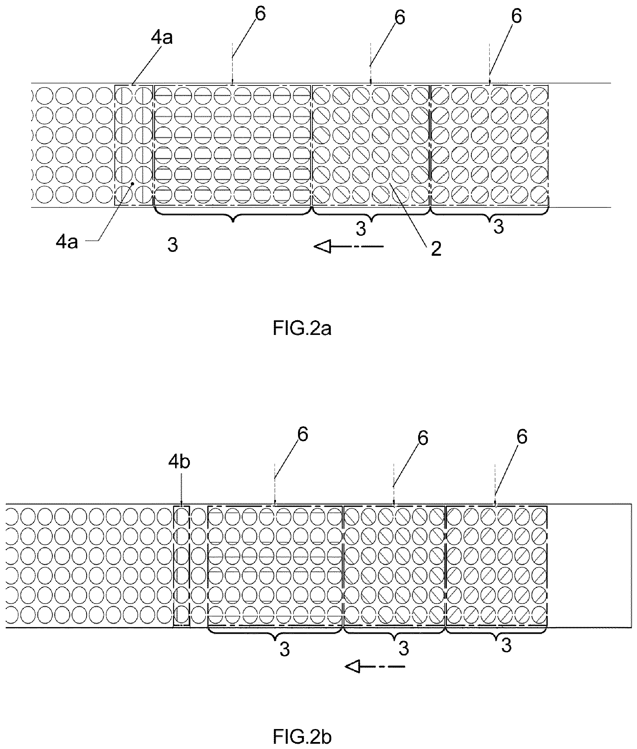

For this, the invention comprises a thermoforming station that is equipped with a press (1) made up of a fixed portion (1a), a movable table (1b) and a head (1c) and fed by a sheet (2) of thermoforming material, coming from a reel (not shown), which is pulled by a chain (15) arranged on guides (9). The sheet runs over heating stations (3), Figures 2a and 2b, with Teflon plates for heating the plastic of the sheet, and the thermoforming mould (4a, 4b) of the containers is located after this.

The press is configured to allow different tools to be placed, in other words, different types of moulds, with the corresponding piston caps thereof, adapted to each mould to make the upper closure thereof leak tight and allow the sheet to be moulded, thermoforming the containers.

As seen in Figures 2a and 2b, the lines (6) show the positions of the heating stations (3) and the thermoforming mould (4a, 4b), which remain fixed for all formats. By way of example, the feed step of the machine, with straight and conical containers, is 133 mm; and the moulds of these formats have two rows of six units each, such there are ten heating steps and the containers are subsequently formed in the next step, as shown in Figure 2a.

In the case of the thermoforming mould of a row to obtain inverted conical containers (7), as can be seen in Figure 2b, neither the positions of the heating stations nor the heating plates change; only the operator will have to change the thermoforming tooling: moulds (4a, 4b) and piston cap (5a, 5b). This change is carried out conventionally, so it is not described in further detail. As previously mentioned, in the case of the inverted conical format, the mould has a single row of 6 units, arranged transversely to the sheet (2); and as seen in Figure 2b, it is assembled off-centre from the forming press, leaving a free passage between said mould and the adjacent heating plates. In this case, the feed step of the machine is 66.5 mm; and the first heating area, which is in the forward direction of the sheet, is turned off, since it has already been heated fourteen times with the two heating areas closest to the mould (4b), and it is heated even better than in the previous formats, being able to progressively heat until reaching the core and increase the final temperature a bit more, since after heating, there is a free passage wherein the material will lose some temperature before reaching the forming position. Therefore, in this case of the mould with 6x1 cavities (4b), the machine is configured so that the stations after thermoforming work every two machine cycles since they are common to both types of moulds.

The feed step is different for this format because the mould (4b) has a single row to allow the opening for demoulding, and that is why the position of said mould (4b) in the forming area leaves a free passage in the final position of the heating stations, to allow the opening of said mould without sticking to the heating plate.

In the inverted conical container format, the thermoforming mould has a single row, which means that production for the inverted conical format will be around 10,000 containers per hour; when the machine produces with this format, the dosing, welding and cutting stations will work once every two cycles, in other words, one cycle on and one cycle off, since the welding and cutting stations are common to all formats.

As already mentioned, to make 2x2, 3x2 and 2x4 packs in the inverted conical format and to demould them, the mould (4b) of the press must have two parts (8) so that they can be separated and opened when the press lowers, in order to remove the inverted conical containers (7) after thermoforming, unlike the cylindrical and non-inverted conical containers that can be removed directly without opening the mould. It is necessary that the mould (4b), when opening, does not stick to the containers formed in the preceding cycle; therefore, a tilted machining (9a) has been provided on the guides (9) of the chain (15) in the outlet area of the thermoforming mould (4b) of the plastic sheet (2) which forces the containers (7) obtained in the preceding cycle to make a small break, which causes them to tilt, separating them from the opening mould, and preventing it from hitting them when opening.

It is known that the machine comprises a cutting station for cutting the pack format (1x2, 2x2, 3x2, 4x2) previously selected by an operator.

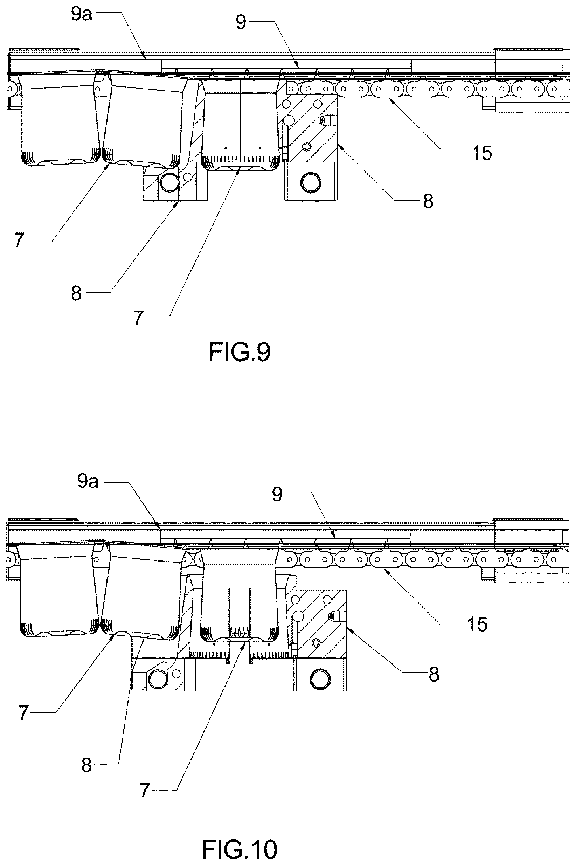

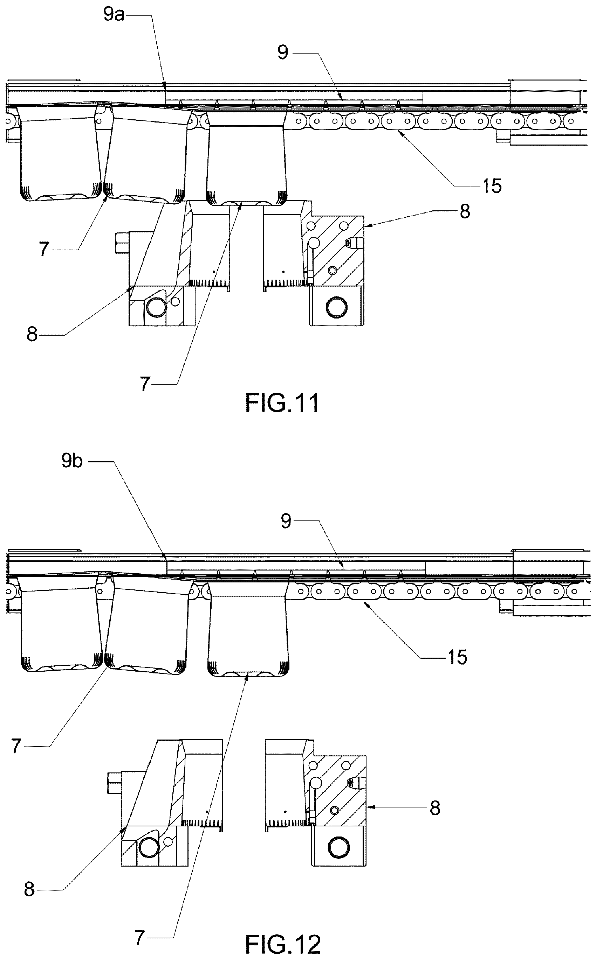

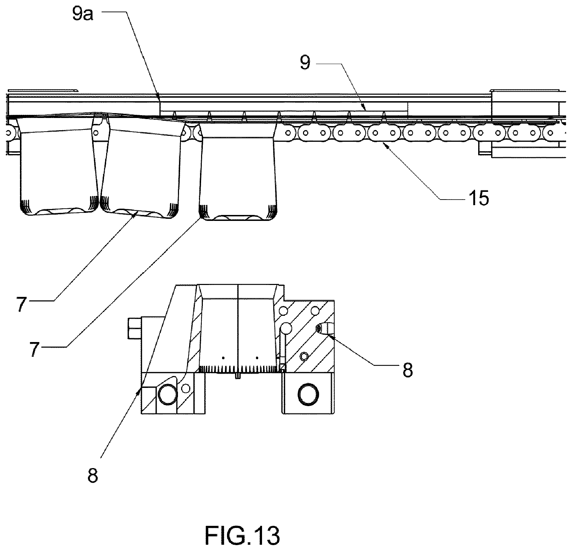

Figures 9 to 13 show the diagram of the opening movement of the mould (4b), wherein the movable table (1b) (not represented in these figures) is responsible for raising the mould (4b) against the piston cap (5b), to thermoform the containers (7) and lower them to allow the forward movement, freeing the height of the vessels, as is known in the state of the art.

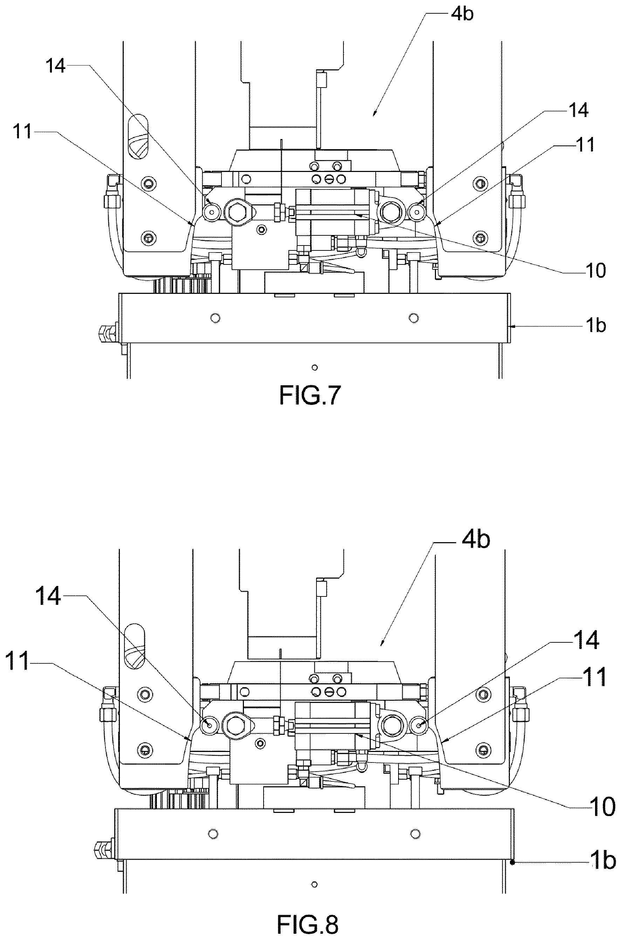

In the case of the inverted conical format, the mould (4b) comprises an opening system for opening the two parts (8) for demoulding. As can be seen in Figures 7 and 8, the mould is opened by a pneumatic actuator (10), made up of a cylinder that tries to separate the two parts, parts which separate as the movable table lowers (Figure 7); the separation of the two halves of the opening mould occurs progressively by means of a cam (11) that marks the position of roller followers (14); when the forming press stops lowering, the cylinder recloses the two halves of the parts (8).

As is known and mentioned, the pulling of the sheet (2) is carried out by the chain (15) with spikes, which are nailed in close to the sides thereof, transporting it along the machine. Moreover, prior to puncturing, the machine is preheated in the area that is going to be punctured (not shown) as is also known, but with the difference that the puncture is carried out at a height greater than usual so that the machining (9a) of the guides (9) provides the break that is needed to separate the bottoms of the containers (7), and thus enable the mould to be opened without it sticking in the row of containers formed in the preceding cycle.

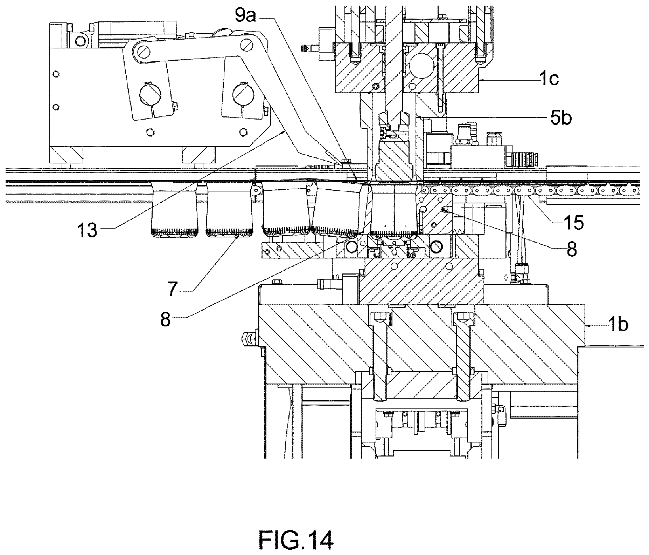

Moreover, to facilitate the tilting of the previously formed containers, a hold-down arm (13) (Figure 14) for the sheet in the area where the tilted guides (9) begin has been included.

It should be noted that, as is known in the state of the art, the machine of the invention can make containers with and without labels; therefore, the thermoforming press has a system with two rotating moulds, arranged at 180° (not represented since they are conventional) in such a way that while one of them is being thermoformed, the labels are being placed on the other; when the forming press lowers, the moulds rotate 180°; the one that is covered with labels is placed in the thermoforming position, and the one that has just been thermoformed is placed in the labelling position, then the movable table is raised again to thermoform the mould that is covered with labels, these labels being affixed to the thermoformed vessel due to the lacquer of the label material; and the other mould is covered with labels.

In addition to all this, and as is known, the thermoforming head (1c) has a lifting system, such that when the thermoforming process ends, the head (1c) is lifted, separating the thermoforming mould (4b) from the piston cap (5b) and releasing the closing pressure (Figure 8); like the cams (11) for opening the inverted conical mould (4b), they are assembled on the head; said cams (11) are lifted with it and apart from releasing the closing pressure, they allow a small opening of the two halves (8) of the moulds before they start to lower; then, the thermoforming movable table (1b) lowers the moulds (4b), allowing for the progressive opening marked by the cam (11) in the mould that is in the forming position; once it stops lowering, the pneumatic cylinder (10) closes the two parts (8) of the mould (4b) that it has just demoulded while the rotation takes place; when the moulds have rotated 180°, the mould that had been thermoformed has been placed closed in the labelling position; and when the movable table is lifted again, the labels are introduced into said mould, while the other one, which had been covered with labels in the preceding cycle, is thermoformed.

## Claims

1. A thermoforming machine for containers, comprising a thermoforming station, equipped with a press (1) that is fed by a sheet (2) of previously heated thermoforming material; the sheet being pulled by a chain (15) arranged on guides (9), and the press being equipped with a head (1c), wherein a piston cap is provided, and a movable table (1b) configured to assemble at least one thermoforming mould (4b) for inverted conical containers (7), said thermoforming mould (4b) comprising two parts (8) that can be separated when demoulding is carried out by lowering the movable table; **characterised in that** after the mould, the chain guides have a machining (9a) tilted in an upward direction, which creates a break in the sheet so that the previously formed containers (7) tilt, moving them away from the mould (4b) and preventing the mould from contacting said previously formed containers when opened.

2. Machine, according to claim 1, comprising a hold-down arm (13) for the sheet in the area where the tilted guides begin, to facilitate the tilting of the previously formed containers.

3. Machine, according to claim 1 or 2, wherein the separable two-piece mould comprises a row of cavities for obtaining a row of inverted conical containers transversely to the machine in each machine step.

4. Machine, according to any of the preceding claims, comprising a cutting station for cutting packs, selected from a pack of 1x2, 2x2, 3x2 and 4x2.

5. Machine, according to any of the preceding claims, wherein the machine is configured so that the stations after thermoforming work every two machine cycles.

6. Machine, according to any of the preceding claims, wherein the separable parts (8) are actuated by a pneumatic actuator (10) and comprise roller followers (14) that rest on cams (11) provided on the head (1c) to separate both parts as the movable table (1b) lowers.

7. Machine, according to claim 6, wherein the two-piece mould is assembled off-centre, leaving a free machine passage to allow for the opening thereof without contacting the adjacent heating plate.

8. Machine, according to any of claims 3 to 7, comprising a labeller equipped with pairs of moulds that can rotate 180°, wherein one has the labels arranged in the mould before thermoforming, while thermoforming is carried out on the other.

## Patentansprüche

1. Thermoformmaschine für Behälter, die eine Thermoformstation umfasst, die mit einer Presse (1) ausgestattet ist, zu der eine Bahn (2) eines zuvor erhitzten Thermoformmaterials zugeführt wird, wobei die Bahn durch eine an Führungen (9) angeordnete Kette (15) gezogen wird, und wobei die Presse mit einem Kopf (1c), in dem eine Kolbenkappe vorgesehen ist, und einem beweglichen Tisch (1b), der für das Montieren wenigstens einer Thermoform (4b) für umgekehrt konische Behälter (7) konfiguriert ist, ausgestattet ist, wobei die Thermoform (4b) zwei Teile (8) umfasst, die voneinander getrennt werden können, wenn eine Formentnahme durch das Senken des beweglichen Tisches durchgeführt wird, **dadurch gekennzeichnet, dass** die Kettenführungen nach der Form eine nach oben geneigte Verarbeitungseinrichtung (9a) aufweisen, die einen Bruch in der Bahn erzeugt, sodass die zuvor geformten Behälter (7) geneigt werden und von der Form (4b) weg bewegt werden, wodurch verhindert wird, dass die Form die zuvor geformten Behälter beim Öffnen berührt.

2. Maschine nach Anspruch 1, die einen Niederhaltearm (13) für die Bahn in dem Bereich, in dem die geneigten Führungen beginnen, umfasst, um das Neigen der zuvor geformten Behälter zu unterstützen.

3. Maschine nach Anspruch 1 oder 2, wobei die trennbare, zweiteilige Form eine Reihe von Hohlräumen für das Erhalten einer Reihe von umgekehrt konischen Behältern quer zu der Maschine in jedem Maschinenschritt umfasst.

4. Maschine nach einem der vorstehenden Ansprüche, die eine Schneidestation für das Schneiden von Packungen in einer Packungsanordnung von 1x2, 2x2, 3x2 oder 4x2 umfasst.

5. Maschine nach einem der vorstehenden Ansprüche, wobei die Maschine derart konfiguriert ist, dass die Stationen nach dem Thermoformen für jeden zweiten Maschinenzyklus betrieben werden.

6. Maschine nach einem der vorstehenden Ansprüche, wobei die trennbaren Teile (8) durch ein pneumatisches Stellglied (10) betätigt werden und Stützrollen (14), die auf an dem Kopf (1c) vorgesehenen Nocken (11) ruhen, umfassen, um die beiden Teile zu trennen, wenn sich der bewegliche Tisch (1b) senkt.

7. Maschine nach Anspruch 6, wobei die zweiteilige Form exzentrisch montiert ist und einen freien Maschinendurchgang für eine Öffnung der Form ohne eine Berührung der benachbarten Heizplatte erlaubt.

8. Maschine nach einem der Ansprüche 3 bis 7, die eine Etikettiereinrichtung umfasst, die mit Paaren von Formen ausgestattet ist, die sich um 180°C drehen können, wobei die Etiketten in einer der Formen vor dem Thermoformen angeordnet werden, während in der anderen Form ein Thermoformen durchgeführt wird.

## Revendications

1. Machine de thermoformage pour récipients, comprenant une station de thermoformage, équipée d'une presse (1) qui est alimentée par une feuille (2) de matériau de thermoformage préalablement chauffé ; la feuille étant tirée par une chaîne (15) disposée sur des guides (9), et la presse étant équipée d'une tête (1c), dans laquelle un capuchon de piston est fourni, et une table mobile (1b) configurée pour assembler au moins un moule de thermoformage (4b) pour des récipients coniques inversés (7), ledit moule de thermoformage (4b) comprenant deux parties (8) qui peuvent être séparées lorsque le démoulage est réalisé en abaissant la table mobile ; **caractérisée en ce que** après le moule, les guides de chaîne présentent un usinage (9a) incliné dans une direction vers le haut, qui crée une rupture dans la feuille de sorte que les récipients préalablement formés (7) sont inclinés, les éloignant du moule (4b) et évitant que le moule ne soit en contact avec lesdits récipients préalablement formés lorsqu'il est ouvert.

2. Machine selon la revendication 1, comprenant un bras de maintien vers le bas (13) pour la feuille dans la surface où les guides inclinés débutent, pour faciliter l'inclinaison des récipients préalablement formés.

3. Machine selon la revendication 1 ou 2, dans laquelle le moule en deux pièces séparables comprend une rangée de cavités pour obtenir une rangée de récipients coniques inversés transversalement par rapport à la machine dans chaque étape de machine.

4. Machine selon l'une quelconque des revendications précédentes, comprenant une station de coupe pour couper des packs, choisis parmi un pack de 1x2, 2x2, 3x2 et 4x2.

5. Machine selon l'une quelconque des revendications précédentes, dans laquelle la machine est configurée de sorte que les stations après thermoformage travaillent tous les deux cycles de machine.

6. Machine selon l'une quelconque des revendications précédentes, dans laquelle les parties séparables (8) sont actionnées par un dispositif d'actionnement pneumatique (10) et comprennent des rouleaux suiveurs (14) qui restent sur des cames (11) fournies sur la tête (1c) pour séparer les deux parties lorsque la table mobile (1b) s'abaisse.

7. Machine selon la revendication 6, dans laquelle le moule en deux pièces est assemblé en étant décentré, laissant un passage de machine libre pour permettre l'ouverture de celui-ci sans mise en contact avec la plaque de chauffage adjacente.

8. Machine selon l'une quelconque des revendications 3 à 7, comprenant une étiqueteuse équipée de paires de moules qui peuvent tourner à 180°, dans laquelle un présente les étiquettes disposées dans le moule avant le thermoformage, alors que le thermoformage est réalisé sur l'autre.
